# EUROPÄISCHE PATENTSCHRIFT

(11) **EP 1 712 330 B1**
(45) Veröffentlichungstag und Bekanntmachung des Hinweises auf die Patenterteilung: **27.02.2008**
(21) Anmeldenummer: 05008033.2
(22) Anmeldetag: 13.04.2005
(51) Int. Cl.: B23Q 41/02, B23Q 7/14, B23Q 7/04

(54) **Fertigungs-Anlage**
Manufacturing plant
Unité de fabrication

(43) Veröffentlichungstag der Anmeldung: 18.10.2006
(73) Patentinhaber: Cross Hüller GmbH, 71636 Ludwigsburg (DE)
(72) Erfinder: Stengele, Gerald, 71636 Ludwigsburg (DE); Nussbaum, Jörg-Michael, Dr., 71638 Ludwigsburg (DE); Corbean, Ioan-Mircea, 71672 Marbach (DE)
(74) Vertreter: Rau, Manfred

(56) Entgegenhaltungen:
- DE-A1- 19 756 278
- FR-A- 2 586 908
- US-A- 4 844 678
- US-A1- 2003 172 510
- PATENT ABSTRACTS OF JAPAN Bd. 010, Nr. 018 (M-448), 24. Januar 1986 (1986-01-24) & JP 60 177841 A (SHINKOU SEISAKUJIYO:KK), 11. September 1985 (1985-09-11)

## Beschreibung

Die Erfindung betrifft eine Fertigungs-Anlage nach dem Oberbegriff des Anspruches 1.

Derartige in der Praxis allgemein verbreitete, beispielsweise aus DE 197 56 278 A1 oder WO 02/003 88 A1 oder EP 1 084 794 A1 bekannte Fertigungs-Anlagen, die auch als Fertigungs-Straßen bezeichnet werden, weisen mehrere nebeneinander angeordnete Bearbeitungs-Maschinen auf, denen Werkstücke über eine Transport-Einrichtung und eine als LadeEinrichtung dienende Übergabe-Einrichtung zugeführt bzw. entnommen werden. Diese bekannten Fertigungs-Anlagen sind konstruktiv sehr aufwändig.

Aus der US 4,844,678 A ist eine Fertigungs-Anlage bekannt, bei der um einen Drehtisch herum unterschiedliche Bearbeitungs-Maschinen angeordnet sind. An einer Seite des Drehtischs ist eine Transporteinrichtung angeordnet, die U-förmig gebogen verläuft, wobei der Scheitelpunkt dieser Transporteinrichtung sich in der Nähe des Drehtischs befindet. Auf dem Drehtisch sind in gleichen Winkelabständen jeweils um eine horizontale Schwenkachse schwenkbar gelagerte Werkstück-Greifer angebracht, deren Zahl um 1 größer ist als die Zahl der ebenfalls in gleichen Winkelabständen angeordneten Bearbeitungs-Maschinen. Die Wirkungsweise ist derart, dass mittels eines Greifers ein zu bearbeitendes Werkstück von der Transporteinrichtung abgehoben und jeweils taktweise nacheinander den verschiedenen Bearbeitungs-Maschinen zugeführt wird. Am Ende wird es wieder auf einem freien Platz der Transporteinrichtung abgelegt.

Aus der FR 2 586 908 A ist eine der vorstehend beschriebenen Fertigungs-Anlage ähnliche Anlage bekannt.

Aus der JP 60-177 841 A ist eine Werkstück-Übergabe-Vorrichtung bekannt, die einen Drehteller aufweist, an dem mehrere um eine horizontale Achse X schwenkbare Werkstück-Träger angebracht sind.

Der Erfindung liegt daher die Aufgabe zugrunde, eine Fertigungs-Anlage derart weiterzubilden, dass diese einfach aufgebaut ist und eine flexible Bearbeitung von Werkstücken ermöglicht.

Diese Aufgabe wird erfindungsgemäß durch die Merkmale des Anspruches 1 gelöst. Durch die Ausgestaltung der Übergabe-Einrichtung können in einfacher Weise zu bearbeitende Werkstücke von der Transport-Einrichtung aufgenommen und auf eine Bearbeitungs-Maschine übergeben bzw. aus dieser entnommen und auf eine andere gegenüberliegende Bearbeitungs-Maschine zur weiteren Bearbeitung oder die Transport-Einrichtung zum Weitertransport übergeben werden. Insbesondere lassen sich sowohl parallele als auch sequentielle Bearbeitungen durchführen, das heißt, es können gleichzeitig an einander gegenüber angeordneten Bearbeitungs-Maschinen an zwei verschiedenen Werkstücken die gleichen Bearbeitungsvorgänge durchgeführt werden; es können aber auch nacheinander an allen Bearbeitungs-Maschinen an demselben Werkstück verschiedene Bearbeitungsvorgänge durchgeführt werden.

Insbesondere die Weiterbildung nach Anspruch 2 ist besonders vorteilhaft, weil hierbei die Transportbewegung der Transport-Einrichtung einerseits und die Verschiebbarkeit des Werkzeug-Schlittens der Bearbeitungs-Maschine andererseits dazu ausgenutzt werden, die Übergabe des Werkstücks auf den Werkstück-Greifer bzw. die Entnahme hieraus durchzuführen. Anspruch 3 gibt hierfür vorteilhafte konstruktive Einzelheiten wieder.

Die Möglichkeiten der Erfindung lassen sich besonders vorteilhaft ausnutzen, wenn die Weiterbildungen nach Anspruch 4 und 5 vorgesehen sind.

Weitere Merkmale, Vorteile und Einzelheiten der Erfindung ergeben sich aus der nachfolgenden Beschreibung eines Ausführungsbeispiels anhand der Zeichnung. Es zeigt:
- Fig. 1: eine Fertigungs-Anlage nach der Erfindung in Draufsicht,

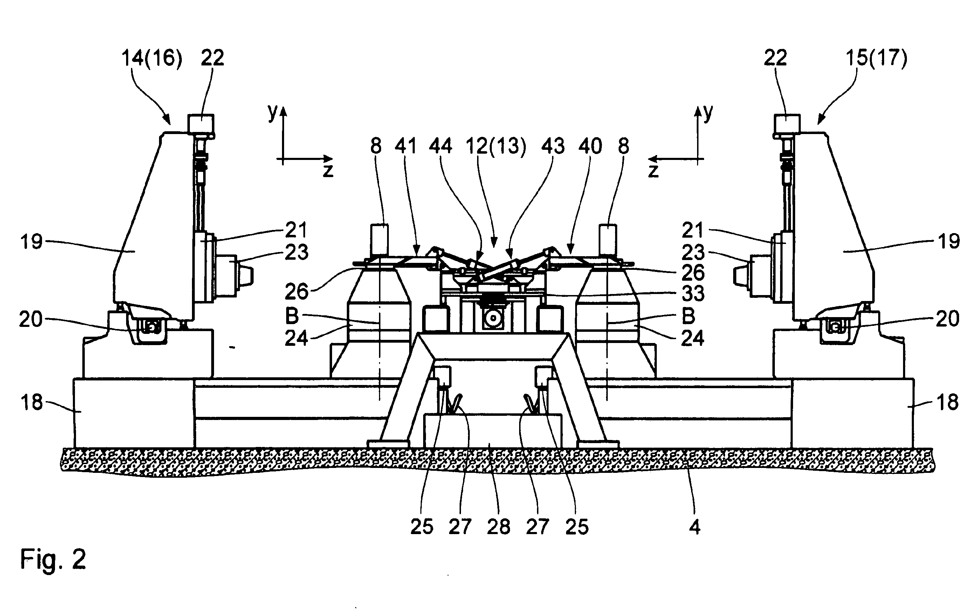

- Fig. 2: eine Seitenansicht einer Übergabe-Einrichtung der Fertigungs-Anlage mit Werkstück-Greifern in herabgeschwenkter Übergabe- bzw. Entnahme-Position,

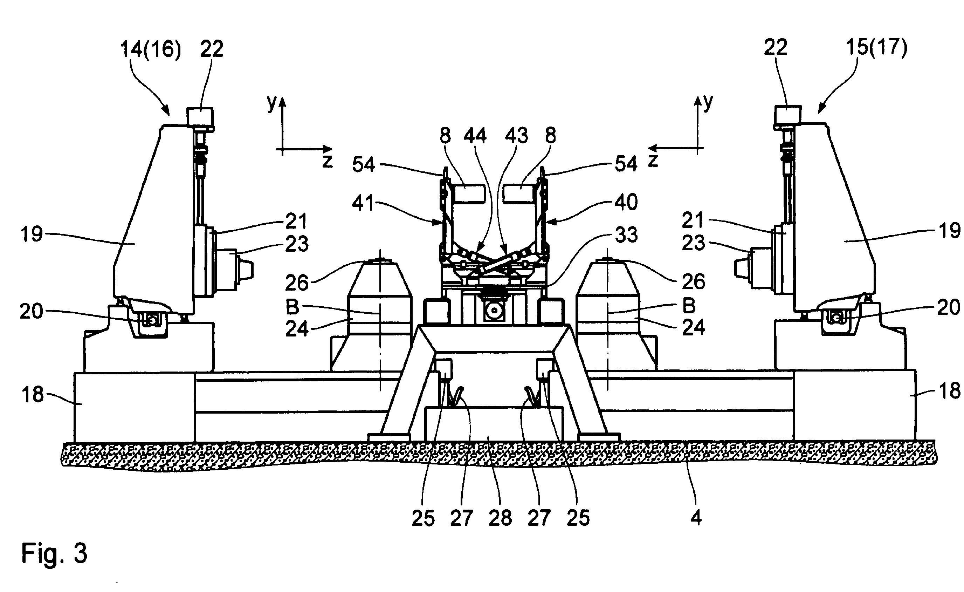

- Fig. 3: eine Darstellung entsprechend Figur 2 mit hochgeschwenkten Werkstück-Greifern,

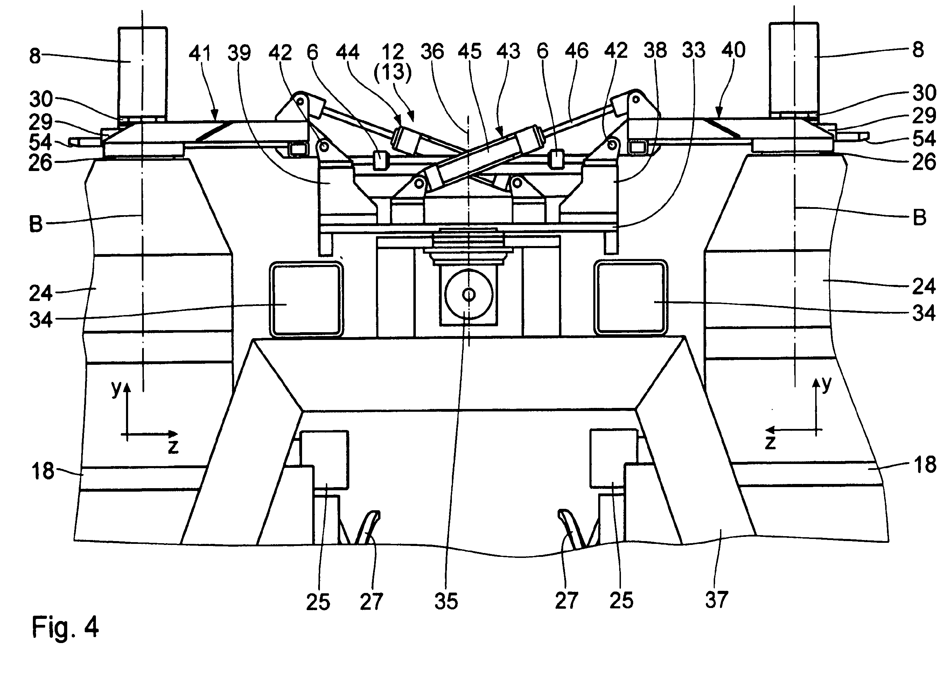

- Fig. 4: eine vergrößerte Teildarstellung aus Figur 2,
- Fig. 5: eine vergrößerte Teildarstellung aus Figur 1 mit einem Werkstück-Schlitten mit einer Adapter-Platte ohne Werkstück vor einer Werkzeug-Spindel,
- Fig. 6: eine Teil-Seitenansicht eines Werkstück-Greifers mit Werkstück in teilweise aufgebrochener Darstellung, und

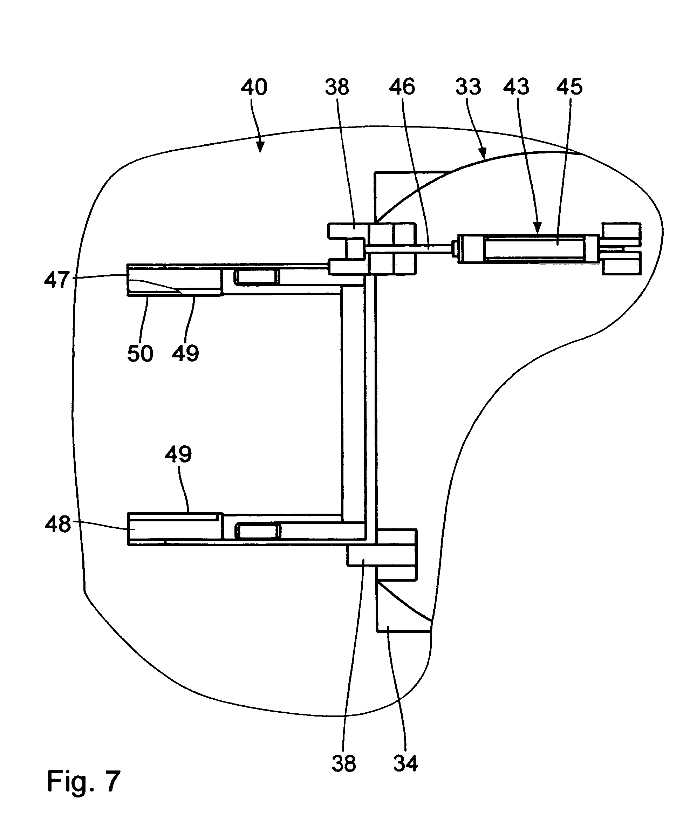

- Fig. 7: eine Draufsicht auf einen Werkstück-Greifer in teilweise aufgebrochener Darstellung.

Die in der Zeichnung dargestellte Fertigungs-Anlage zur mechanischen Bearbeitung von Werkstücken weist in einer Reihe angeordnete Transport-Einrichtungen 1, 2, 3 auf. Diese weisen auf dem Boden 4 abgestützte Gestelle 5 auf, an deren Oberseite hintereinander Transport-Rollen 6 drehbar gelagert sind. Diese Transport-Rollen einer jeden Transport-Einrichtung 1, 2, 3 werden von einem Motor 7 drehangetrieben, sodass zu transportierende Werkstücke 8 in einer Transport-Richtung 9 transportiert werden können.

Zwischen benachbarten Transport-Einrichtungen 1 und 2 bzw. 2 und 3 sind an Übergabe-Positionen 10, 11 jeweils eine Übergabe-Einrichtung 12 bzw. 13 angeordnet. An den Übergabe-Positionen 10, 11 sind jeweils quer zur Transport-Richtung 9 Bearbeitungs-Maschinen 14, 15, 16, 17 angeordnet. Diese im Ausführungsbeispiel gleichartig ausgebildeten Bearbeitungs-Maschinen 14 bis 17 weisen ein Maschinen-Gestell 18 auf, auf dem ein x-Schlitten in x-Richtung, die parallel zur Transport-Richtung 9 verläuft, mittels eines Kugel-Roll-Spindel-Antriebs 20 horizontal verschiebbar abgestützt ist. Der x-Schlitten 19 trägt einen y-Schlitten 21, der in y-Richtung mittels eines Kugel-Roll-Spindel-Antriebs 22 vertikal verschiebbar ist. Am y-Schlitten 21 ist eine drehantreibbare Werkzeug-Spindel 23 gelagert, die sich senkrecht zur x-Richtung und zur y-Richtung quer zur Transport-Richtung 9 in z-Richtung zur Übergabe-Einrichtung 12 bzw. 13 erstreckt. Zwischen der Werkzeug-Spindel 23 und der jeweiligen Übergabe-Einrichtung 12 bzw. 13 ist ein Werkstück-Schlitten 24 auf dem Maschinen-Gestell 18 zwischen einer Bearbeitungs-Position vor der Werkzeug-Spindel 23 und der jeweiligen Übergabe-Position 10 bzw. 11 verfahrbar. Die Bewegungen des Werkstücks 18 auf der jeweiligen Bearbeitungs-Maschine 14 bis 17 in z-Richtung (also in der z-Achse) erfolgen im vorliegenden Ausführungsbeispiel also jeweils mittels des Werkstück-Schlittens 24. Der Antrieb des Werkstück-Schlittens 24 in z-Richtung erfolgt ebenfalls mittels eines Kugel-Roll-Spindel-Antriebs 25. Derartige Bearbeitungs-Maschinen 14 bis 17 sind in der Praxis bekannt.

Auf dem Werkstück-Schlitten 24 ist ein Werkstück-Tisch 26 angeordnet, der um eine vertikale, also parallel zur y-Richtung verlaufende B-Achse schwenkbar ist. Er kann alternativ um eine nur angedeutete horizontal und parallel zur x-Richtung und Transport-Richtung 9 verlaufende A-Achse schwenkbar sein.

Beiderseits des Verschiebewegs der Werkstück-Schlitten 24 sind als Spiralförderer ausgebildete Späne-Förderer 27 angebracht, die Späne in eine zentrale unter den Transport-Einrichtungen 1 bis 3 verlaufende Späne-Förder-Einrichtung 28 fördern.

Zum Transport der Werkstücke 8 und zur Aufspannung der Werkstücke 8 auf dem jeweiligen Werkstück-Tisch 26 sind in Form rechteckiger Platten ausgebildete Adapter-Platten 29 als Werkstück-Träger vorgesehen, auf denen wiederum Werkstück-Aufnahmen 30 ausgebildet sind. Auf einer Adapter-Platte 29 wird jeweils ein Werkstück 8 in genau definierter Lage in der Aufnahme 30 eingespannt. Derartige Adapter-Platten sind im Grundsatz bekannt aus EP 1 260 304 B1 (entsprechend US 6,619,641 B2). Die Aufspannung einer Adapter-Platte 29 und hierauf eingespanntem Werkstück 8 erfolgt mittels sogenannter Nullpunkt-Spanner 31, die im Werkstück-Tisch 26 angeordnet und nach Art einer Werkzeug-Spanneinrichtung ausgebildet sind. Sie ergreifen und spannen einen an der Unterseite der Adapter-Platte 29 angebrachte hinterschnittene Spann-Bolzen 32, wodurch die Adapter-Platte 29 auf den Werkstück-Tisch 26 gespannt wird. Derartige Nullpunkt-Spanner 31 sind beispielsweise bekannt aus DE 199 20 291 A1 und US 6,641,128 B2.

Die Übergabe-Einrichtungen 12, 13 weisen jeweils einen Drehtisch 33 auf, der auf einem Trag-Gestell 34 mittels eines Motors 35 um eine vertikale Drehachse 36 drehantreibbar gelagert ist. Das Trag-Gestell 34 ist mittels Stützen 37 auf dem Boden 4 abgestützt.

Auf dem Drehtisch 33 sind - einander diametral gegenüberliegend - zwei Lagerböcke 38, 39 angebracht, in denen jeweils ein Werkstück-Greifer 40, 41 jeweils um eine horizontale Achse 42 schwenkbar gelagert ist. Jeder Werkstück-Greifer 40 bzw. 41 ist mittels eines Schwenk-Antriebs 43 bzw. 44 zwischen einer horizontalen Übergabe- und Entnahme-Stellung und einer vertikalen Transport-Stellung verschwenkbar. Die Schwenk-Antriebe 43, 44 bestehen aus hydraulisch beaufschlagbaren Kolben-Zylinder-Antrieben, deren Zylinder 45 am Drehtisch 33 angelenkt sind, während das freie Ende der jeweiligen Kolbenstange 46 am jeweiligen Greifer 40 bzw. 41 angelenkt ist. Bei ausgefahrener Kolbenstange 46 befindet sich der Greifer 40 bzw. 41 in seiner horizontalen Position, während er sich bei in den Zylinder 45 eingefahrener Kolbenstange 46 in seiner vertikalen Position befindet.

Der Werkstück-Greifer 40 bzw. 41 ist gabelförmig ausgebildet, das heißt er weist zwei zueinander parallele Arme 47, 48 auf, die sich senkrecht zur Schwenk-Achse 42 erstrecken. Die der Schwenkachse 42 abgewandten Enden der Arme 47, 48 sind also nicht miteinander verbunden.

Auf den einander zugewandten Innenseiten 49 der Arme 47, 48 ist jeweils eine Nut 50 ausgebildet, die ebenfalls parallel zueinander verlaufen. Am Werkstück-Träger sind an einander gegenüberliegenden Längsseiten 51 Positionier-Stifte 52 als Halte-Elemente angebracht, die der jeweiligen Nut 50 angepasst sind.

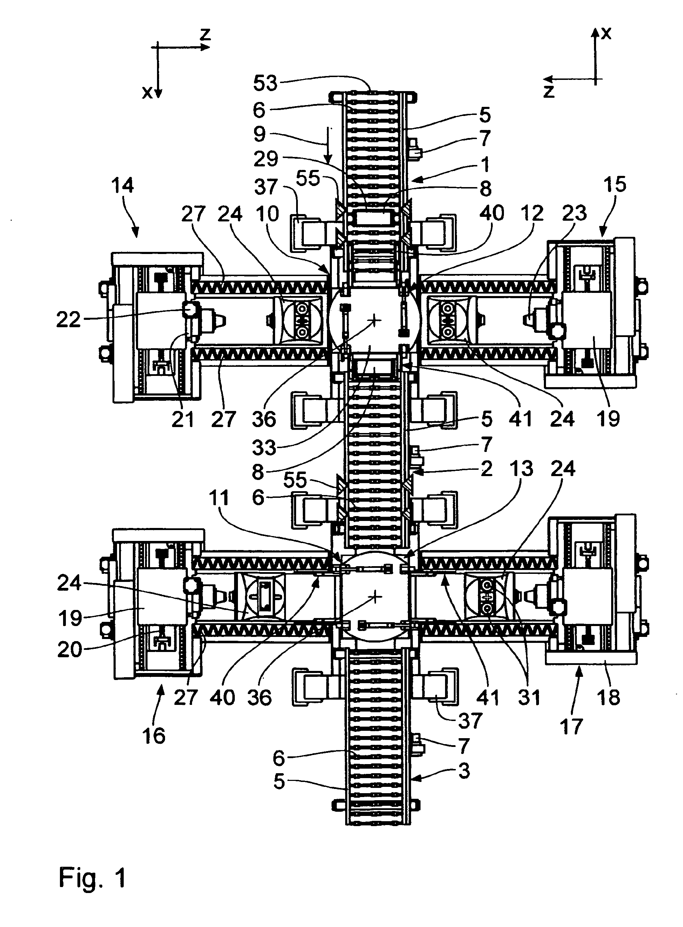

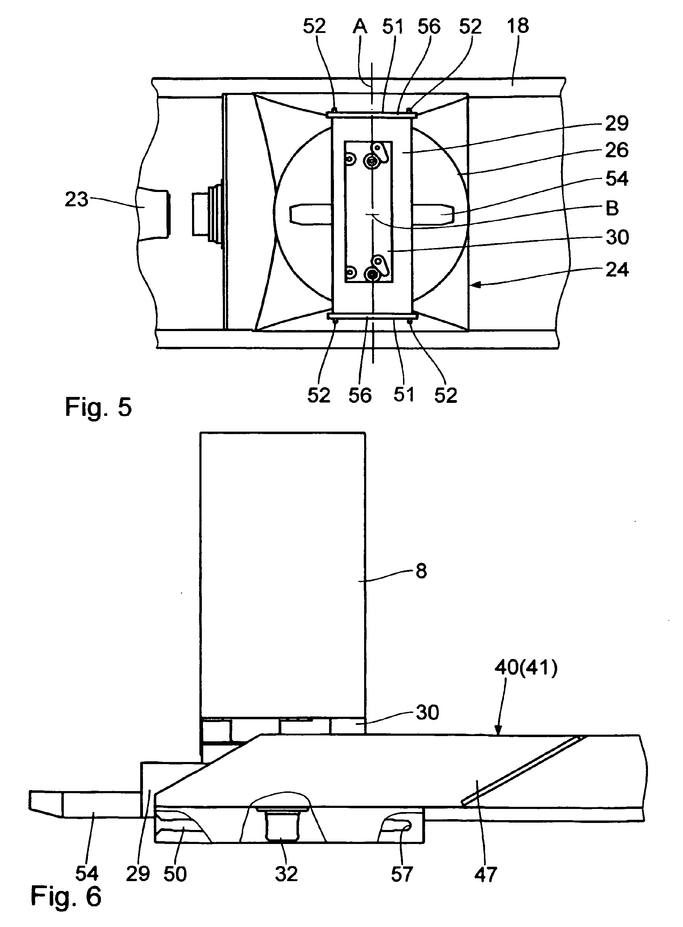

Wie Fig. 1 i.V.m. Fig. 5 und 6 entnehmbar ist, weisen die Transport-Rollen 6 mittig jeweils eine Führungsrolle 53 auf. Diese wirken zusammen mit einer an der Adapter-Platte 29 angebrachten mittleren Führungs-Schiene 54, wodurch gewährleistet wird, dass die Adapter-Platte 29 beim Transport auf den Transport-Einrichtungen 1, 2, 3 mittig, also zentriert transportiert wird. Die sich in Transport-Richtung 9 erstreckenden Führungs-Schienen 54 stellen gleichzeitig sicher, dass eine Adapter-Platte 29 während des Transports nicht kippen und sich zwischen zwei benachbarten Transport-Rollen 6 verkeilen kann, da die jeweilige Führungs-Schiene 54 sich über den Abstand mehrerer Transport-Rollen 6 erstreckt.

In Transport-Richtung 9 vor den Übergabe-Einrichtungen 12, 13 befinden sich am jeweiligen Gestell seitliche Stopper 55, die mit seitlichen Führungs-Schienen 56 der Adapter-Platte 29 zusammenwirken und letztere vor der jeweiligen Übergabe-Einrichtung 12 bzw. 13 abbremsen. Diese seitlichen Führungs-Schienen 56 wirken auch mit den Transport-Rollen 6 zusammen, wie Fig. 1 entnehmbar ist.

Die Arbeitsweise ist wie folgt:

Entsprechend der Darstellung in Figur 1 oben wird auf der Transport-Einrichtung 1 ein mittels der Werkstück-Aufnahme 30 auf der Adapter-Platte 29 aufgespanntes Werkstück 8 in Transport-Richtung 9 zur ersten Übergabe-Einrichtung 12 der ersten Übergabe-Position 10 gefördert. Der Drehtisch 33 ist derart verschwenkt, dass ein Greifer 40 sich in horizontaler Position unmittelbar über der Transport-Einrichtung 1 befindet. Der andere Greifer 41 befindet sich hierbei über der die Übergabe-Positionen 10, 11 verbindenden Transport-Einrichtung 2.

Die auf der Transport-Einrichtung 1 herangeförderte Adapter-Platte 29 wird von den Stoppern 55 abgebremst und von den angetriebenen Transport-Rollen 6 ausgerichtet zwischen die Arme 47, 48 des Werkstück-Greifers 40 geschoben, wobei die Positionier-Stifte 52 in die Nuten 50 gelangen. Der Einschub der Adapter-Platte 29 in den Werkstück-Greifer 14 erfolgt im Wesentlichen mittels der angetriebenen Transport-Rollen 6. Wenn der Werkstück-Greifer 40 mittels des Schwenk-Antriebs 43 in die vertikale hochgeschwenkte Stellung verschwenkt wird, dann rutscht die Adapter-Platte 29 mit dem Werkstück 8 aufgrund der Schwerkraft in eine untere Endlage, die durch das Ende der Nut 50 definiert ist und die als Anschlag 57 für einen Positionier-Stift 52 dient. Hierbei kann es sich aber nur noch um eine Bewegung von einem oder sehr wenigen Millimetern handeln. Der andere Werkstück-Greifer 41 trägt eine Adapter-Platte 29 mit einem bearbeiteten Werkstück 8, die auf der Transport-Einrichtung 2 abgesetzt und von den angetriebenen Transport-Rollen 6 aus dem Werkstück-Greifer 41 herausgezogen und zur zweiten Übergabe-Einrichtung 13 transportiert wird. Durch Drehen des Drehtisches 33 um 90° gelangt das in dem hochgeschwenkten Werkstück-Greifer 40 befindliche Werkstück 8 über den Werkstück-Schlitten 24, beispielweise der Bearbeitungs-Maschine 15. Beim Drehen des Drehtisches 33 befinden sich immer beide Werkstück-Greifer 40 und 41 in ihrer hochgeschwenkten Stellung.

Unmittelbar benachbart zur ersten Übergabe-Einrichtung 12 wartet bereits der Werkstück-Schlitten 24 dieser Bearbeitungs-Maschine 15, auf den der Werkstück-Greifer 40 mit der Adapter-Platte 29 unter entsprechender Betätigung des Schwenk-Antriebes 43 heruntergeschwenkt wird. Hierbei gelangen die Spann-Bolzen 32 dieser Adapter-Platte 29 in die Nullpunkt-Spanner 31, die geschlossen werden. Aufgrund der exakten Positionierung der Adapter-Platte 29 zum Werkstück-Greifer 40 wird wiederum sichergestellt, dass die Adapter-Platte 29 eine exakte Lage relativ zum Werkstück-Schlitten 24 hat. Anschließend wird der Werkstück-Schlitten 24 dieser Bearbeitungs-Maschine 15 in z-Richtung zur Werkzeug-Spindel 23 verfahren, wo dann eine übliche spanende Bearbeitung des Werkstücks 8 erfolgt. Eine solche Position des mit einem Werkstück 8 beladenen Werkstück-Schlittens 24 vor der Werkzeug-Spindel 23 ist für die Bearbeitungs-Maschine 16 in Figur 1 dargestellt. In Figur 1 ist weiterhin der Drehtisch 33 der zweiten Übergabe-Einrichtung 13 in einer Position dargestellt, in der die beiden Werkstück-Greifer 40, 41 den Bearbeitungs-Maschinen 16, 17 zugewandt sind, in denen die Werkstück-Greifer 40 bzw. 41 zu bearbeitende Werkstücke 8 auf dem jeweiligen Werkstück-Schlitten 24 absetzen bzw. bearbeitete Werkstücke 8 von diesem aufnehmen können. Sie befinden sich also in einer Beschickungs- oder Entnahme-Position. Demgegenüber befindet sich die erste Übergabe-Einrichtung 12 in einer Aufnahme- bzw. Weitergabe-Position.

Durch die erfindungsgemäße Ausgestaltung ist es möglich, jeweils ein Werkstück 8 nur auf einer Bearbeitungs-Maschine 14, 15, 16 oder 17 zu bearbeiten und dementsprechend jeweils zwei Werkstücke 8 entweder an der ersten Übergabe-Position 10 oder zweiten Übergabe-Position 11 von der Transport-Einrichtung 1 direkt auf die Transport-Einrichtung 2 oder von der Transport-Einrichtung 2 direkt auf die Transport-Einrichtung 3 überzusetzen. Gleichermaßen kann ein Werkstück 8 nacheinander auf allen vier Bearbeitungs-Maschinen 14 bis 17 unter entsprechendem Umsetzen bearbeitet werden. Gleichermaßen können Werkstücke 8 nacheinander nur auf den auf einer Seite befindlichen Bearbeitungs-Maschinen 14, 16 bzw. den gegenüberliegenden Bearbeitungs-Maschinen 15, 17 bearbeitet werden. In gleicher Weise können auch nur auf einer Seite der Transport-Einrichtungen 1, 2, 3 Bearbeitungs-Maschinen, beispielweise also nur die Bearbeitungs-Maschinen 14, 16 oder nur die Bearbeitungs-Maschinen 15, 17 angeordnet sein. Der Werkstückfluss durch die Fertigungs-Anlage ist in der Regel so, dass eine Bearbeitungs-Maschine 14 oder 15 bzw. 16 oder 17 mit einem Werkstück 8 be- oder entladen wird, während die gegenüberliegende Bearbeitungs-Maschine 15 bzw. 14 oder 17 bzw. 16 ein Werkstück 8 bearbeitet.

## Patentansprüche

1. Fertigungs-Anlage
- mit mehreren Transport-Einrichtungen (1, 2, 3) zum Transport von Werkstücken (8) in einer Transport-Richtung (9),
- mit mehreren, mindestens auf einer Seite der Transport-Einrichtungen (1, 2, 3) angeordneten Bearbeitungs-Maschinen (14, 15, 16, 17), und
- mit mehreren vor den Bearbeitungs-Maschinen (14, 15, 16, 17) angeordneten Übergabe-Einrichtungen (12, 13) zur Übergabe eines Werkstücks (8) von den Transport-Einrichtungen (1, 2, 3) auf die Bearbeitungs-Maschinen (14 bis 17) und von den Bearbeitungs-Maschinen (14 bis 17) auf die Transport-Einrichtungen (1, 2, 3), wobei
-- die Übergabe-Einrichtungen (12, 13) einen Drehtisch (33) aufweisen,
-- der Drehtisch (33) drehantreibbar ist,
-- auf dem Drehtisch (33) zwei einander diametral gegenüberliegend angeordnete, jeweils um eine horizontale Schwenkachse (42) schwenkbar gelagerte Werkstück-Greifer (40, 41) angeordnet sind, und
-- auf dem Drehtisch (33) an den Werkstück-Greifern (40, 41) angreifende Schwenk-Antriebe (43, 44) zum Verschwenken der Werkstück-Greifer (40, 41) zwischen einer abgesenkten Übergabe- und Entnahme-Position und einer hochgeschwenkten Transport-Position angeordnet sind,
**dadurch gekennzeichnet,**
**dass** die Transport-Einrichtungen (1, 2, 3) in einer Reihe angeordnet sind,
**dass** die Übergabe-Einrichtungen (12, 13) zwischen benachbarten Transport-Einrichtungen (1, 2, 3) angeordnet sind, und
**dass** die Bearbeitungs-Einrichtungen (14, 16 bzw. 15, 17) entlang der Transport-Richtung (9) angeordnet sind.

2. Fertigungs-Anlage nach Anspruch 1, **dadurch gekennzeichnet, dass** die Bearbeitungs-Maschinen (14 bis 17) einen quer zur Transport-Richtung (9) verfahrbaren Werkstück-Schlitten (24) aufweisen, dass die Werkstück-Greifer (40, 41) gabelförmig ausgebildet sind, und dass die Werkstücke (8) mittels der Transport-Einrichtungen (1, 2, 3) und des Werkstück-Schlittens (24) in die Werkstück-Greifer (40, 41) einschiebbar und herausziehbar sind.

3. Fertigungs-Anlage nach Anspruch 2, **dadurch gekennzeichnet, dass** Werkstück-Träger für die Werkstücke (8) vorgesehen sind, die seitliche Halte-Elemente aufweisen, und
**dass** die gabelförmig ausgebildeten Werkstück-Greifer (40, 41) Arme (47, 48) mit zur Aufnahme der Halte-Elemente dienenden Nuten (50) aufweisen.

4. Fertigungs-Anlage nach Anspruch 1, **dadurch gekennzeichnet, dass** an jeder Übergabe-Einrichtung (12, 13) zwei einander diametral gegenüberliegende Bearbeitungs-Maschinen (14, 15 bzw. 16, 17) vorgesehen sind.

5. Fertigungs-Anlage nach Anspruch 3, **dadurch gekennzeichnet, dass** die Werkstück-Träger mindestens eine mit den Transport-Einrichtungen (1, 2, 3) zusammenwirkende Führungs-Schiene (54, 56) aufweisen.

## Claims

1. A manufacturing plant, comprising
- several conveyors (1, 2, 3) for conveying works (8) in a conveying direction (9);
- a plurality of processing machines (14, 15, 16, 17) which are disposed on at least one side of the conveyors (1,2, 3); and
- a plurality of delivery devices (12, 13) which are disposed in front of the processing machines (14, 15, 16, 17) for delivery of a work (8) from the conveyors (1, 2, 3) to the processing machines (14 to 17) and from the processing machines (14 to 17) to the conveyors (1,2,3);
wherein
-- the delivery devices (12, 13) comprise a rotary table (33);
-- the rotary table (33) is rotatably drivable;
-- two work grabs (40, 41) are disposed on the rotary table (33), which oppose one another diametrically and which are pivoted about a horizontal pivoting axis (42); and
-- pivoting drives (43, 44) are disposed on the rotary table (33), acting on the work grabs (40, 41) for pivoting the work grabs (40, 41) between a downward position of delivery and removal and an upward conveying position,
**characterized**
**in that** the conveyors (1, 2, 3) are arranged in a row,
**in that** the delivery devices (12, 13) are arranged between adjacent conveyors (1, 2, 3), and
**in that** the processing machines (14, 16 and 15, 17, respectively) are arranged along the conveying direction.

2. A manufacturing plant according to claim 1, **characterized**
**in that** the processing machines (14 to 17) comprise a work skid (24) which is displaceable crosswise of the conveying direction (9);
**in that** the work grabs (40, 41) are forked; and
**in that** the works (8) are pushable into the work grabs (40, 41), and pullable out of said work grabs (40, 41), by the conveyor (1, 2, 3) and the work skid (24).

3. A manufacturing plant according to claim 2, **characterized**
**in that** work carriers for the works (8) are provided, having lateral retaining elements; and
**in that** the forked work grabs (40, 41) have arms (47, 48) with grooves (50) for accommodation of the retaining elements.

4. A manufacturing plant according to claim 1, **characterized**
**in that** two diametrically opposed processing machines (14, 15 and 16, 17, respectively) are provided on each delivery device (12, 13).

5. A manufacturing plant according to claim 3, **characterized**
**in that** the work carriers comprise at least one guide rail (54, 56) which cooperates with the conveyor (1, 2, 3).

## Revendications

1. Unité de fabrication
- avec plusieurs dispositifs de transport (1, 2, 3) pour le transport de pièces à usiner (8) dans un sens de transport (9)
- avec plusieurs machines d'usinage (14, 15, 16, 17) disposées, sur au moins un côté des dispositifs de transport (1, 2, 3), et
- avec plusieurs dispositifs de transmission (12, 13) disposés avant les machines d'usinage (14, 15, 16, 17), pour la transmission d'une pièce à usiner (8) depuis les dispositifs de transport (1, 2, 3) vers les machines d'usinage (14 à 17) et des machines d'usinage (14 à 17) vers les dispositifs de transport (1, 2, 3), où
-- les dispositifs de transmission (12, 13) présentent un plateau rotatif (33)
-- le plateau rotatif (33) est rotatif
-- deux pinces à pièce à usiner (40, 41) pivotantes, diamétralement opposées, sont fixées, chacune sur un essieu horizontal, sur le plateau rotatif (33) et
-- des commandes de pivotement (43, 44) saisissant la platine rotative (33) au niveau des pinces à pièces à usiner (40, 41), sont disposées, afin de faire pivoter les pinces à pièces à usiner (40, 41) entre une position basse de transmission et de prise, et une position de transport pivotée vers le haut,
**caractérisée en ce que** les dispositif de transports (1, 2, 3) sont disposés en ligne,
**en ce que** les dispositif de transmission (12, 13), sont disposés entre des dispositif de transports (1, 2, 3) adjacents,
**en ce que** les machines d'usinage (14, 16 et 15, 17) sont disposées le long du sens de transport (9)

2. Unité de fabrication selon la revendication 1, **caractérisée en ce que** les machines d'usinage (14 à 17) présentent un chariot à pièces à usiner (24) déplaçable à la transversale du sens de transport (9),
**en ce que** les pinces à pièces à usiner (40, 41) sont en forme de fourche, et
**en ce que** les pièces à usiner (8) peuvent être introduites et retirées dés pinces à pièces à usiner (40, 41), à l'aide des dispositifs de transport (1, 2, 3) et du chariot à pièces à usiner (24).

3. Unité de fabrication selon la revendication 2, **caractérisée en ce que** des portes pièces pour les pièces à usiner (8), présentant des dispositifs de retenue latéraux sont prévus, et
**en ce que** les pinces à pièces à usiner (40, 41), en forme de fourche, présentent des bras (47,48) avec des fentes (50), servant à recevoir les éléments de retenue.

4. Unité de fabrication selon la revendication 1, **caractérisée en ce que**, sur chaque dispositif de transmission (12, 13), deux machines d'usinage (14, 15 et 16, 17) diamétralement opposées, sont prévues.

5. Unité de fabrication selon la revendication 3, **caractérisée en ce que**, les portes pièces présentent au moins un rail de guidage (54, 56) agissant avec les dispositifs de transport (1, 2, 3).
